# EUROPÄISCHE PATENTSCHRIFT

(11) **EP 1 698 893 B1**
(45) Veröffentlichungstag und Bekanntmachung des Hinweises auf die Patenterteilung: **04.06.2008**
(21) Anmeldenummer: 06075436.3
(22) Anmeldetag: 24.02.2006
(51) Int. Cl.: G01N 29/265

(54) **Positionierfahrzeug zum Positionieren einer Messsonde**
Positioning vehicle for the positioning of a measurement sonde
Véhicule de positionnement pour positionner une sonde de mesure

(30) Priorität: 25.02.2005 DE 102005009513
(43) Veröffentlichungstag der Anmeldung: 06.09.2006
(73) Patentinhaber: BAM Bundesanstalt für Materialforschung und- Prüfung, 12205 Berlin (DE)
(72) Erfinder: Wiggenhauser, Herbert, 12279 Berlin (DE); Schaurich, Dieter, 12683 Berlin (DE)
(74) Vertreter: Pfenning, Meinig & Partner GbR

(56) Entgegenhaltungen:
- DE-A1- 3 508 415
- DE-A1- 3 524 857
- US-A- 3 999 423
- US-A- 4 044 594
- US-A- 4 569 230

## Beschreibung

Die Erfindung betrifft ein Verfahren zum Betreiben eines Positionierfahrzeugs zum Positionieren einer Messsonde in definierten Abständen entlang einer Verfahrlinie und ein Positionierfahrzeug zum Durchführen des Verfahrens.

In der Bauindustrie ist es oftmals notwendig, die Qualität eines Bauwerks zu überprüfen. Dabei kann es sinnvoll sein, die Qualität des Bauwerks sowohl während der Phase des Aufbaus, als auch nach Abschluss der Bauarbeiten zu überprüfen. Insbesondere bei Tunneln und bei Brücken ist solch eine Prüfung Pflicht.

Es ist bekannt, Bauwerke mittels Verfahren zu überprüfen, welche auf Schall beruhen. Zu solchen Verfahren zählen das Ultraschall-Messverfahren und das Impact-Echo-Verfahren. Diese Verfahren werden für die Dickenbestimmung von beispielsweise Betonteilen, für die Lokalisierung von Spannkanälen, für die Lokalisierung von Fehlstellen eingesetzt. Beide Verfahren können eigenständig oder in Kombination zur Aufnahme von Messwerten eingesetzt werden. Die Grundlage der Verfahren ist die Untersuchung des Laufzeit- und Frequenzverhaltens der Longitudinalwellen an verschiedenen Messpunkten des zu untersuchenden Objekts.

Die Qualität eines Bauwerks wird überprüft, indem an verschiedenen Punkten des Bauwerks mittels Messsonden, die beispielsweise auf dem Ultraschallverfahren oder auf dem Impact-Echo-Verfahren beruhen, Messwerte aufgenommen werden. Aufgrund der aufgenommenen Messwerte erhält man Aufschluss darüber, wie die Qualität des Bauwerks zu beurteilen ist.

Allerdings erhält man die Messwerte nur für die Stellen, an denen eine Messung durchgeführt wird. Bei einem ausgedehnten Bauwerk müssen somit Messungen an vielen unterschiedlichen Orten durchgeführt werden. Es ist deswegen üblich, zwecks Systematisierung der Messung Raster einzuführen. An den einzelnen Punkten des Rasters werden durch Messungen Messwerte aufgenommen. Dadurch wird der Messaufwand minimiert, bei gleichzeitig hoher Sicherheit, das Bauwerk in seiner Fläche abgedeckt überprüft zu haben.

Zur Überprüfung eines Bauwerks wird eine Messsonde an die durch das Raster gekennzeichneten Stellen des Bauwerks platziert und an dieser Stelle die Messwerte aufgenommen.

Diese Messungen können manuell durchgeführt werden. Allerdings verändert sich die Bedienung der Messgeräte durch die Ermüdung des Personals, was die Messgenauigkeit erheblich beeinträchtigen kann. Flächige Untersuchungen erfordern in der Regel eine große Anzahl von Einzelmessungen, sie sind also besonders anfällig für Bedieneinflüsse.

Um das Messverfahren zumindest teilweise zu automatisieren, ist bekannt, entlang einer Linie von Rasterpunkten Schienen zu verlegen, auf denen eine Messvorrichtung geführt wird: Die Messvorrichtung bewegt sich, üblicherweise automatisch, zu den einzelnen Rasterpunkten, die durch die Führung der Schienen ausgewählt sind, und nimmt an diesen einzelnen Rasterpunkten mittels einer Messsonde Messwerte auf. Auf diese Weise kann entlang einer Linie automatische eine hohe Anzahl von Messwerten aufgenommen werden, Bedieneinflüsse durch Personal sind nahezu ausgeschlossen. So ein Messverfahren ist von Patentschrift DE-3 508 415 bekannt.

Diese Art der Messung ist allerdings mit einem sehr hohen Aufwand verbunden. Bevor eine Messung durchgeführt werden kann, müssen zunächst die Schienen entlang der Linie, an der man das Objekt abrastern möchte, verlegt werden. Die Schienen müssen fixiert werden, um eine sicher und genaue Führung der Messvorrichtung zu gewährleisten. Da üblicherweise mehrere Linien abgerastert werden müssen, was beispielsweise bei einer Überprüfung einer großen Fläche der Fall wäre, müssen die Schienen demontiert werden und neu verlegt werden. Dieser Vorgang kann sich zudem sehr oft wiederholen.

Aufgabe der Erfindung ist es deswegen, eine Vorrichtung zu schaffen, die es ermöglicht, eine Messsonde in definierten Abständen entlang einer Verfahrlinie zu positionieren, die unabhängig von einer äußeren mechanischen Führung ist, und mit geringem Aufwand auf eine neue Verfahrlinie eingestellt werden kann, sowie es eine weitere Aufgabe der Erfindung ist, ein Verfahren zu schaffen, mit dem insbesondere die erfindungsgemäße Vorrichtung betrieben werden kann.

Diese Aufgaben werden durch eine Vorrichtung und durch ein Verfahren nach den unabhängigen Ansprüchen gelöst.

Die Erfindung schafft ein Positionierfahrzeug zum Positionieren einer Messsonde in definierten Abstände entlang einer Verfahrlinie, enthaltend ein verfahrbares Fahrzeugbasisteil mit einer Führungsvorrichtung und einem von dieser Führungsvorrichtung in einer Führung geführten Messsondenträger, wobei die Führung den Messsondenträger parallel zur Verfahrrichtung des Fahrzeugbasisteils führt, und die Führung einen ersten Umkehrpunkt und einen zweiten Umkehrpunkt aufweist, und die Führungsvorrichtung Führungsmittel aufweist, um bei einem Verfahren des Fahrzeugbasisteils den Messsondenträger nach seinem Erreichen des zweiten Umkehrpunktes in Verfahrrichtung bis zu dem ersten Umkehrpunkt zu führen, und um den Messsondenträger nach seinem Erreichen des ersten Umkehrpunkts entgegen der Verfahrrichtung bis zum zweiten Umkehrpunkt zurückzuführen, wobei in der Phase der Rückführung der Messsondenträger relativ zum Fahrzeugbasisteil die negative Geschwindigkeit des Fahrzeugbasisteils besitzt. Dadurch ist eine Vorrichtung geschaffen, die es ermöglicht, entlang einer Verfahrlinie in definierten Abständen und in einer definierten Weise mittels einer am Messsondenträger untergebrachten Messsonde Messwerte aufzunehmen, die eine äußere Führung, wie beispielsweise durch Schienen, nicht benötigt. Eine neue Verfahrlinie des erfindungsgemäßen Positionierfahrzeugs kann im einfachsten Falle durch Umsetzen des Positionierfahrzeugs ausgewählt werden.

Erfindungsgemäß ist das Fahrzeugbasisteil verfahrbar. Um diese Verfahrbarkeit zu gewährleisten, ist das Fahrzeugbasisteil bevorzugt mit vier Rädern ausgestattet. Prinzipiell ist auch eine andere Anzahl von Rädern möglich, sowie man auch anstatt der Räder beispielsweise Ketten oder dergleichen einsetzen könnte. Wichtig ist, dass das Fahrzeugbasisteil eine gewisse Stabilität aufweist.

Im einfachsten Falle wird das Positionierfahrzeug manuell verfahren. Als Alternative kann aber das Positionierfahrzeug auch einen Motor aufweisen, mittels dem sich das Positionierfahrzeug selbständig fortbewegen kann. Wird ein Motor verwendet, so ist in einer bevorzugten Ausführungsform die Geschwindigkeit des Motors und somit auch des Positionierfahrzeugs wählbar.

Der Messsondenträger dient zur Aufnahme einer Messsonde. Dies kann beispielsweise eine Messsonde für die Ultraschallmessung sein, oder eine Messsonde für die Impact-Echo-Messung. Ebenfalls lassen sich auch mehrere Messsonden an dem Messsondenträger befestigen, sowie auch das gleichzeitige Einbringen von verschiedenartigen Messsonden möglich ist.

Mittels dem erfindungsgemäßen Positionierfahrzeug wird beispielsweise eine an dem Messsondenträger befestigte Messsonde entlang einer Verfahrlinie des Positionierfahrzeugs in definierten Abständen positioniert: Es soll angenommen sein, dass zum Beginn des Verfahrens des Positionierfahrzeugs entlang der Verfahrlinie der Messsondenträger sich am zweiten Umkehrpunkt befindet. Beginnt man nun, das Positionierfahrzeug entlang der Verfahrlinie zu verfahren, so wird durch die Führungsvorrichtung der Messsondenträger und die mit dem Messsondenträger verbundene Messsonde zum ersten Umkehrpunkt der Führung geführt. In dieser Phase ist die Geschwindigkeit des Messsondenträgers, gemessen relativ zu einem Boden, auf dem das Positionierfahrzeug verfahren wird, größer als die des Fahrzeugbasisteils: Der Messsondenträger mit der verbundenen Messsonde eilt damit dem Fahrzeugbasisteil voraus.

Erreicht der Messsondenträger den auf der Führung liegenden ersten Umkehrpunkt, so beginnt die Rückführphase des Messsondenträgers. In dieser zweiten Phase wird bei einem Verfahren des Positionierfahrzeugs der Messsondenträger mit der Messsonde von der Führungsvorrichtung in der Führung zum zweiten Umkehrpunkt zurückgeführt. Die Geschwindigkeit des Messsondenträgers relativ zum Fahrzeugbasisteil entspricht dabei der negativen Geschwindigkeit, die das Positionierfahrzeug relativ zu dem Boden besitzt, auf dem es verfahren wird. Dies heißt, dass der Messsondenträger in der Rückführphase, also in der Phase, in der er vom ersten Umkehrpunkt zum zweiten Umkehrpunkt zurückgeführt wird, sich über einer festen Stelle des Bodens befindet, auf dem das Positionierfahrzeug verfahren wird.

Während dieser Rückführphase, in der der Messsondenträger und damit auch die Messsonde sich über einer festen Stelle des Bodens befindet, ist es möglich, mit der Messsonde eine oder mehrere Messungen durchzuführen. Die Zeit, die zur Verfügung steht, diese Messungen durchzuführen, ist dabei durch die Geschwindigkeit, mit der das Positionierfahrzeug verfahren wird, festgelegt, sowie durch den räumlichen Abstand zwischen dem ersten und dem zweiten Umkehrpunkt: Verfährt man das Positionierfahrzeug langsamer oder vergrößert man den Abstand zwischen den beiden Umkehrpunkten, so wird der Zeitraum, in dem sich die Messsonde über einer festen Stelle des Bodens befindet verlängert, wodurch und längere und aufwendigere Messungen, wie z.B. Mehrfachmessungen, möglich sind. Falls das Positionierfahrzeug schneller verfahren wird, oder der Abstand zwischen erstem und zweitem Umkehrpunkt verkleinert wird, so wird die Zeitspanne des Rückführens des Messsondenträgers verkürzt, wodurch ebenfalls auch der Zeitraum verkürzt wird, in dem Messungen durchgeführt werden können.

Erreicht der Messsondenträger schließlich wieder den zweiten Umkehrpunkt, so beginnt oben beschriebener Vorgang von neuem.

Eine bevorzugte Ausführungsform der Erfindung ist, dass der Messsondenträger mit einer konstanten Geschwindigkeit vom zweiten zum ersten Umkehrpunkt, also in der Phase, in der der Messsondenträger dem Fahrzeugbasisteil vorauseilt, geführt wird. Legt man des Weiteren den Abstand zwischen dem ersten und dem zweiten Umkehrpunkt fest, so wird der Messsondenträger bei einem Verfahren des Positionierfahrzeugs auf einem Boden entlang der Verfahrlinie in exakt konstanten Abständen positioniert. Durch eine Vergrößerung oder Verkleinerung des Abstands zwischen erstem und zweitem Umkehrpunkt kann der konstante Abstand zwischen den einzelnen Positionen vergrößert oder verkleinert werden. Auf diese Weise ist es möglich, wenn man den Messsondenträger mit einer Messsonde versieht, entlang einer Verfahrlinie Messwerte aufzunehmen, die einen definierten Abstand besitzen.

Das erfindungsgemäße Positionierfahrzeug lässt sich neben dem Positionieren von Messsonden auch für andere Aufgabe verwenden: Beispielsweise kann der Messsondenträger mit einer Markierungsvorrichtung ausgestattet sein, um eine Oberfläche mit Markierungen zu versehen. Des Weiteren kann das Positionierfahrzeug auch zum Positionieren von Sensoren verwendet werden, ebenso wie zum Positionieren von Aktoren oder Werkzeugen. Eine weitere Möglichkeit, das Positionierfahrzeug zu verwenden, ist, den Messsondenträger mit einer Aufnahmevorrichtung auszustatten, um Fotoaufnahmen an den einzelnen Punkten eines Rasters aufzunehmen.

Vorteilhafte Weiterbildungen der Erfindung werden in den abhängigen Ansprüchen beschrieben.

Eine vorteilhafte Weiterbildung der Erfindung sieht vor, dass die Führungsvorrichtung einen ersten Schalter und einen zweiten Schalter aufweist, und der Messsondenträger am Ort des ersten Umkehrpunkts den ersten Schalter auslöst und der Messsondenträger am Ort des zweiten Umkehrpunkts den zweiten Schalter auslöst, und die Auslösung des ersten Schalters die Führungsmittel zum Führen des Messsondenträgers entgegen der Verfahrrichtung des Fahrzeugbasisteils aktivieren, und die Auslösung des zweiten Schalters die Führungsmittel zum Führen des Messsondenträgers in Verfahrrichtung des Fahrzeugbasisteils aktivieren.

### Von der Erfindung bevorzugt wird ein Mikroschalter:

Trifft der Messsondenträger auf den ersten oder den zweiten Mikroschalter, so werden entsprechende Führungsmittel aktiviert. Die Lage der Mikroschalter legt damit den räumlichen Abstand des ersten und des zweiten Umkehrpunkts fest. Alternativ kann anstatt eines Mikroschalters auch ein Reedschalter verwendet werden. Auch andere Schaltertypen, wie z.B. Lichtsensoren, sind prinzipiell möglich.

Eine weitere vorteilhafte Weiterbildung der Erfindung sieht vor, dass die Führungsvorrichtung einen umlaufenden Riemen aufweist, der parallel zu der Führung des Messsondenträgers angeordnet ist, und der bei einem Verfahren des Fahrzeugbasisteils durch mechanische Übertragungsmittel, die eine Bewegung des Fahrzeugbasisteils übertragen, in Bewegung gesetzt wird, und der Messsondenträger sich am Ort des ersten Umkehrpunkts mit dem Teil des Riemens mittels Verbindungsmittel verbindet, der sich entgegen der Verfahrrichtung des Fahrzeugbasisteils bewegt, und der Messsondenträger sich am Ort des zweiten Umkehrpunkts mittels Verbindungsmittel mit dem Teil des Riemens verbindet, der sich mit der Verfahrrichtung des Fahrzeugbasisteils bewegt.

Der umlaufende Riemen kann auf verschiedene Arten und Weisen gestaltet sein: Beispielsweise kann der Riemen ein handelsüblicher Riemen aus verstärktem Gewebe sein. Alternativ kann aber auch eine Kette eingesetzt werden. Auch die Oberflächenbeschaffenheit des Riemens kann variieren. Erfindungsgemäß bevorzugt wird ein Riemen mit einer Zahnstruktur, der durch Zahnräder in Bewegung gesetzt werden kann.

Die mechanischen Übertragungsmittel übertragen eine Bewegung des Fahrzeugbasisteils, welches beispielsweise über einen Boden verfahren wird, auf den Riemen. Als mechanische Übertragungsmittel werden erfindungsgemäß Zahnräder verwendet, alternativ wäre aber natürlich auch die Einbindung von Riemen, Ketten oder dergleichen möglich. Durch die rein mechanische Übertragung einer Bewegung des Positionierfahrzeugs auf den Riemen ist die Umlaufgeschwindigkeit des Riemens direkt mit der Verfahrgeschwindigkeit des Positionierfahrzeugs gekoppelt. Wird das Positionierfahrzeug schneller verfahren, so erhöht sich die Umlaufgeschwindigkeit des Riemens, wird das Positionierfahrzeug langsam verfahren, so ist auch die Umlaufgeschwindigkeit des Riemens entsprechend klein. Dies ist eine wesentliche Voraussetzung dafür, dass bei einem Verfahren des Positionierfahrzeugs der Messsondenträger in konstanten Abständen positioniert wird, unabhängig von der Geschwindigkeit, mit der das Positionierfahrzeug verfahren wird. Dadurch ist es möglich, das Positionierfahrzeug selbst manuell zu verschieben, ohne Einbußen in der Genauigkeit der Abrasterung zu haben.

Die Verbindungsmittel verbinden den Messsondenträger mit dem umlaufenden Riemen, wodurch eine Bewegung des Fahrzeugbasisteils, beispielsweise beim Verfahren des Positionierfahrzeugs, auf den Messsondenträger übertragen wird. Erfindungsgemäß sind die Verbindungsmittel als Klemmvorrichtung ausgebildet, die sich formschlüssig durch Pressen eines Teilbereichs des Zahnriemens gegen einen Anschlag an den Riemen klemmt. Es können aber auch Verbindungsmittel eingesetzt werden, die sich mit dem Riemen kraftschlüssig verbinden.

Alternativ können die Führungsmittel, die den Messsondenträger führen, auch Motoren und eine elektronische Steuerung enthalten. Auf diese Weise ist es ebenfalls möglich, den Messsondenträger bei einem Verfahren des Positionierfahrzeugs in oben beschriebener Weise zu führen. Die vorliegende Erfindung betont aber bewusst eine nahezu rein mechanische Lösung.

Eine weitere vorteilhafte Weiterbildung der Erfindung sieht vor, dass die Führung des Messsondenträgers zwei Führungsstangen aufweist, die den Messsondenträger führen.

Dadurch, dass man zwei Führungsstangen verwendet, wird die Stabilität des Messsondenträgers gewährleistet. Möglich wäre auch die Verwendung von nur einer Führungsstange, allerdings müssten dann weitere konstruktive Maßnahmen getroffen werden, um eine genügende Stabilität des Messsondenträgers zu gewährleisten. Als Alternative können auch Schienen eingesetzt werden, in denen der Messsondenträger geführt wird.

Eine weitere Möglichkeit, die Stabilität des Messsondenträgers zu verbessern, ist, den Messsondenträgers direkt mit den Führungsstangen zu verbinden, und die Führungsstangen verschiebbar in dem Fahrzeugbasisteil zu lagern.

Die Länge der Führungsstangen bestimmt den maximalen Abstand von erstem und zweitem Umkehrpunkt. Bevorzugt sind deswegen die Führungsstangen austauschbar, um das Positionierfahrzeug unterschiedlichen Gegebenheiten anpassen zu können. Möchte man beispielsweise mittels des erfindungsgemäßen Positionierfahrzeugs entlang einer Verfahrlinie eine Messsonde in sehr großen Abständen platzieren, so würde man entsprechend lange Führungsstangen für das Positionierfahrzeug verwenden.

Eine weitere vorteilhafte Weiterbildung der Erfindung sieht vor, dass der Messsondenträger lineare Kugellager aufweist, mittels derer er auf den Führungsstangen gelagert ist.

Dadurch ist gewährleistet, dass der Messsondenträger sich ohne große Reibung auf den Führungsstangen bewegen kann.

Eine weitere vorteilhafte Weiterbildung der Erfindung sieht vor, dass der Messsondenträger eine Absenkvorrichtung aufweist, welche sich absenkt, wenn sich der Messsondenträger am Ort des ersten Umkehrpunktes befindet, und welche sich anhebt, wenn sich der Messsondenträger am zweiten Umkehrpunkt befindet.

Diese erfindungsgemäße Weiterbildung ist insbesondere dann vorteilhaft, wenn man das Positionierfahrzeug zum Durchführen von Ultraschallmessungen oder von Impact-Echo-Messungen verwenden möchte. Bei diesen Messungen ist es notwendig, direkten Kontakt zwischen Messobjekt und Messsonde herzustellen. Die Absenkvorrichtung des Positionierfahrzeugs gewährleistet, dass bei einem Verfahren des Positionierfahrzeugs in der Phase der Rückführung des Messsondenträgers die Messsonde Bodenkontakt hat.

Alternativ kann an Stelle des Luftzylinders auch ein magnetischer Hubeinsatz verwendet werden. Ebenso ist auch die Verwendung einer Spindel zum Absenken des Messsondenträgers möglich.

Eine weitere vorteilhafte Weiterbildung der Erfindung sieht vor, dass die Absenkvorrichtung einen Luftzylinder zwecks Erzeugung eines gleichmäßigen Anpressdrucks aufweist.

Auf diese Weise wird beispielsweise eine Messsonde, die an dem Messsondenträger befestigt ist, mit einem konstanten Druck an ein zu untersuchendes Objekt angepresst. Rastert mit einem solch einem Positionierfahrzeug einen Boden ab, so haben Unebenheiten des Bodens keinen Einfluss auf eine Messung, da der Anpressdruck immer der gleiche ist.

Die Erfindung wird nun anhand eines Ausführungsbeispiels erläutert. Dabei zeigt
- Fig. 1: ein erfindungsgemäßes Positionierfahrzeug in einer Queransicht,
- Fig. 2: skizzenhaft in einer Seitenansicht, und
- Fig. 3: skizzenhaft in einer Aufsicht.

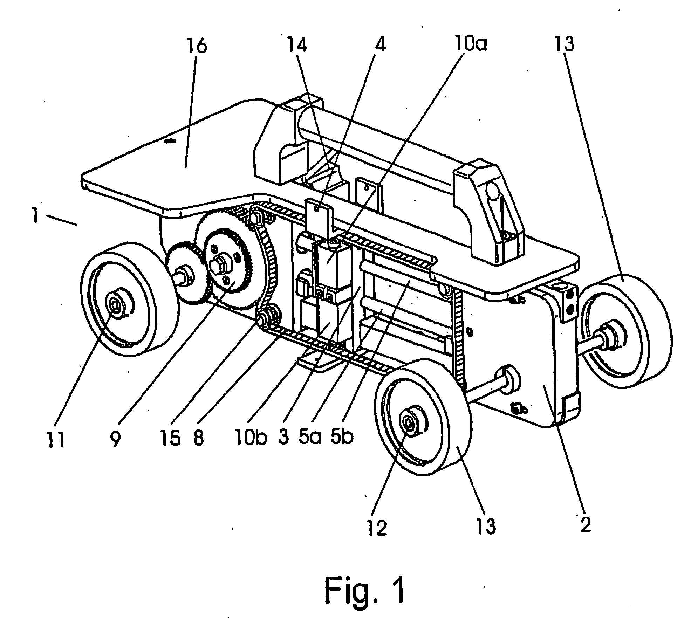

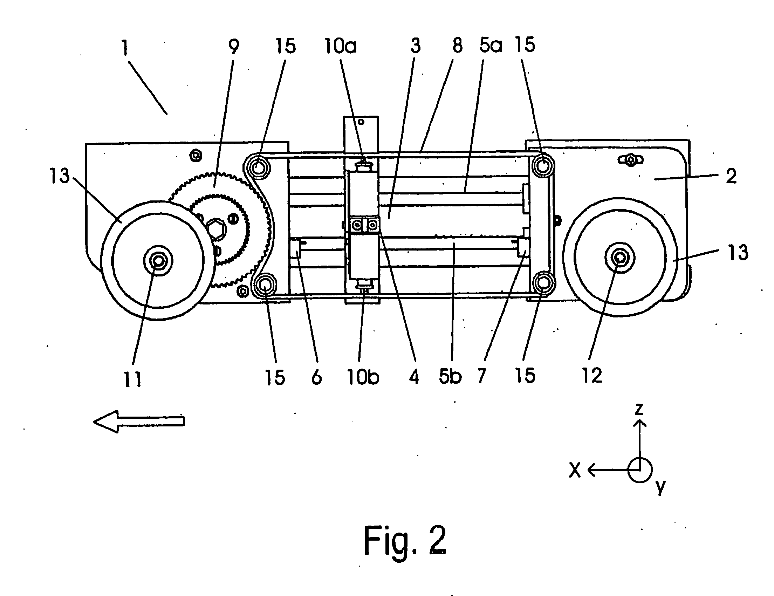

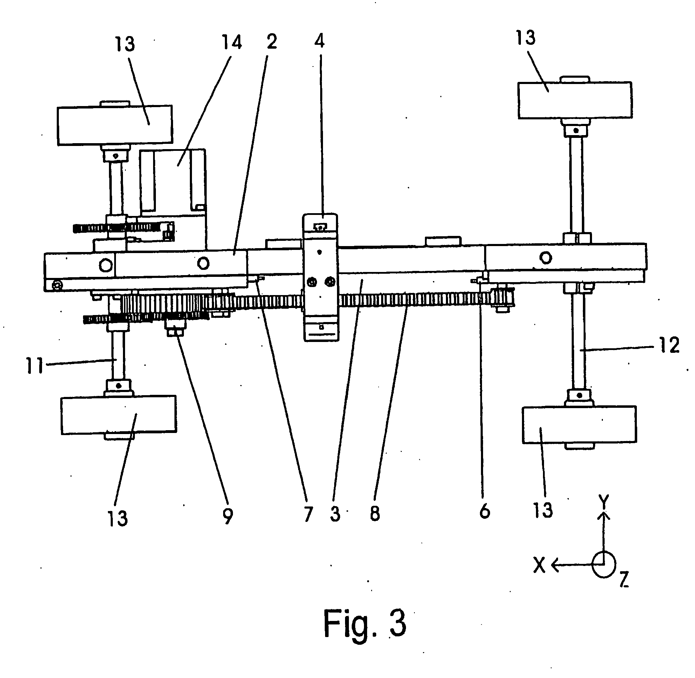

Die Fign. 1 bis 3 zeigen ein erfindungsgemäßen Positionierfahrzeug in mehreren Ansichten. Das Positionierfahrzeug 1 enthält ein verfahrbares Fahrzeugbasisteil 2 mit einer Führungsvorrichtung 3 und einem von dieser Führungsvorrichtung 3 in einer Führung 5 geführten Messsondenträger 4.

Das Fahrzeugbasisteil 2 enthält eine erste Achse 11 und eine zweite Achse 12, an denen jeweils zwei Räder 13 angebracht sind. Diese Achsen sind parallel zueinander angeordnet und befinden sich an den äußeren Enden des Fahrzeugbasisteils 2. Dabei ist die zweite Achse 12 verglichen mit der ersten Achse 11 besonders breit ausgebildet. Die Anordnung der Achsen im vorderen und hinteren Bereich des Fahrzeugbasisteils, sowie die breite Ausbildung der zweiten Achse dienen dazu, dem Positionierfahrzeug eine ausreichende Stabilität gegen Verkippen zu geben. In diesem Ausführungsbeispiel ist durch die Anordnung der beiden Achsen auch die Verfahrlinie des Positionierfahrzeugs vorgegeben. Das Positionierfahrzeug ist entlang einer Linie verfahrbar. Alternativ ist es aber möglich, das Fahrzeugbasisteil mit einer Lenkvorrichtung zu versehen, mit der Achsenanordnung geändert werden kann, womit auch Verfahrlinien möglich sind, die von einer Linie abweichen.

Des Weiteren enthält das Fahrzeugbasisteil 2 einen Motor 14, der das Fahrzeugbasisteil 2 und somit auch das Positionierfahrzeug antreibt. Mittels des Motors, der als Schrittmotor ausgebildet ist, kann das Positionierfahrzeug mit konstanten Geschwindigkeiten von einigen Zentimetern pro Sekunden verfahren werden. Durch Abschalten des Schrittmotors 14 ist es auch möglich, das Positionierfahrzeug manuell zu verfahren.

Die Führungsvorrichtung 3 führt den Messsondenträger 4 in der Führung 5 parallel zur Verfahrrichtung des Fahrzeugbasisteils 2.

Die Führung 5 besteht in diesem Ausführungsbeispiel aus einer ersten Führungsstange 5a und einer zweiten Führungsstange 5b, wobei beide Führungsstangen identisch sind, und horizontal übereinander liegend und parallel ausgerichtet angeordnet sind. Die Enden der Führungsstangen sind im vorderen und hinteren Bereich des Fahrzeugbasisteils 2 lösbar befestigt.

Der Messsondenträger 4 enthält zwei lineare Kugellager, mittels derer er auf den Führungsstangen 5 stabil gelagert ist.

Die Führung weist einen ersten Umkehrpunkt und einen zweiten Umkehrpunkt auf. Der erste Umkehrpunkt wird dabei durch einen Mikroschalter 6 festgelegt, der zweite Umkehrpunkt wird durch einen zweiten Mikroschalter 7 festgelegt. Beide Schalter sind in einem definierten Abstand auf der unteren Führungsstange 5a befestigt. Die Schalter sind dabei gegeneinander ausgerichtet, so dass diese durch ein Führen des Messsondenträgers 4 bei Erreichen des ersten oder des zweiten Umkehrpunktes ausgelöst werden können.

Durch Lösen der Befestigung lassen sich die Mikroschalter 6,7 auf der Führungsstange 5a verschieben. Dadurch kann der Abstand zwischen ersten und zweiten Umkehrpunkt variiert werden.

Die Führungsvorrichtung 3 enthält einen umlaufenden Zahnriemen 8, der parallel zu der Führung 5 des Messsondenträgers 4 angeordnet ist. Der Riemen 8 wird durch vier Zahnräder 15 aufgespannt. Jeweils zwei Zahnräder sind im vorderen und hinteren Bereich des Fahrzeugbasisteils 2 gelagert. Die vier Zahnräder sind in einer gemeinsamen Ebene angeordnet, wobei sich diese Ebene leicht parallel versetzt zu der Ebene befindet, die durch die Führungsstangen 5a und 5b aufgespannt wird. In dieser Ebene sind die vier Zahnräder so angeordnet, dass sich zwei Zahnräder in der Z-Richtung oberhalb der beiden Führungsstangen 5a und 5b befinden, und dass sich zwei Zahnräder 15 in Z-Richtung unterhalb der beiden Führungsstangen 5a und 5b befinden. Des Weiteren ist der Abstand der Zahnräder 15 in X-Richtung so gewählt, dass dieser Abstand der Länge der Führungsstangen 5a und 5b entsprechen. Die Zahnräder sind beweglich gelagert, so dass der Riemen 8 beweglich ist. Als Riemen wird ein verstärktes Gewebe verwendet, das mit einer Zahnstruktur versehen ist.

Das Fahrzeugbasisteil 2 beinhaltet eine Kombination von Zahnrädern 9, die eine Bewegung der ersten Achse 11 auf den Zahnriemen 8 übertragen. Diese Übertragung wird durch eines der Zahnräder 9 hergestellt, welches in die Struktur des Riemens 8 eingreift. Die Drehbewegung der ersten Achse 11 bei einem Verfahren des Fahrzeugbasisteils wird mittels der Kombination der Zahnräder 9 so übersetzt, dass die Umlaufgeschwindigkeit des Riemens relativ zum Fahrzeugbasisteil der Verfahrgeschwindigkeit des Fahrzeugbasisteils 2 und somit des Positionierfahrzeugs 1 entspricht.

Der Messsondenträger 4 enthält Verbindungsmittel 10, mittels derer er sich mit dem Riemen 8 verbinden kann. In diesem Ausführungsbeispiel wird die Verbindung von Messsondenträger 4 und Riemen 8 dadurch hergestellt, dass der Messsondenträger 4 Bolzen und Anschlagflächen aufweist, und die Bolzen einen Bereich des Riemens gegen die Anschlagfläche pressen, wodurch eine formschlüssige Verbindung hergestellt wird. In diesem Ausführungsbeispiel sind ein erstes Verbindungsmittel 10a und ein zweites Verbindungsmittel 10b vorgesehen. Mittels des ersten Verbindungsmittels 10a kann sich der Messsondenträger 4 mit dem Abschnitt des Riemens verbinden, der beim Verfahren des Fahrzeugbasisteils sich in Verfahrrichtung bewegt. Mittels des Verbindungsmittels 10b kann sich der Messsondenträger 4 mit dem Abschnitt des Riemens 8 verbinden, der sich entgegen der Verfahrrichtung des Fahrzeugbasisteils 2 bewegt.

Das erste Verbindungsmittel 10a und das zweite Verbindungsmittel 10b werden durch den zweiten Mikroschalter 7 und den ersten Mikroschalter 6 aktiviert. Erreicht der Messsondenträger 4 den ersten Umkehrpunkt, so wird der erste Mikroschalter 6 ausgelöst. Die Auslösung des ersten Mikroschalters 6 führt dazu, dass sich der Messsondenträger 4 mittels des zweiten Verbindungsmittels 10b mit dem Abschnitt des Riemens 8 verbindet, der sich entgegen der Verfahrrichtung des Fahrzeugbasisteils bewegt. Erreicht der Messsondenträger 4 den zweiten Umkehrpunkt, so wird der zweite Schalter 7 ausgelöst. Die Auslösung des zweiten Schalters 7 führt dazu, dass sich der Messsondenträger mittels des Verbindungsmittels 10a mit dem Abschnitt des Riemens 8 verbindet, der sich in Verfahrrichtung des Fahrzeugbasisteils bewegt. In beiden Vorgängen wird bei Aktivierung eines der beiden Verbindungsmittel das andere Verbindungsmittel deaktiviert, um eine Blockade der Führungsvorrichtung zu verhindern.

Der Messsondenträger enthält eine, in den Zeichnungen nicht explizit dargestellte, Absenkvorrichtung. Mittels der Absenkvorrichtung können beispielsweise an den Messsondenträger befestigte Messsonden zwecks Messung abgesenkt werden. Mittels der Absenkvorrichtung kann die Messsonde gegen ein Objekt, üblicherweise der Boden, auf dem sich das Positionierfahrzeug befindet, gepresst werden.

In der Absenkvorrichtung integriert ist ein Luftzylinder. Mittels des Luftzylinders wird ein konstanter Anpressdruck gewährleistet.

Durch einen Austausch der Führungsstangen 5a und 5b und des Riemens 8 kann das Positionierfahrzeug auf andere Längen umgebaut werden. Da der Abstand, mit dem das Positionierfahrzeug den Messsondenträger 4 positioniert durch den Abstand des ersten Schalters 6 und des zweiten Schalters 7 gegeben ist, und der maximale Abstand des ersten Schalters 6 und des zweiten Schalters 7 durch die Länge der Führungsstangen 5a und 5b bestimmt ist, kann, falls sinnvoll, durch ein Austausch der Führungsstangen 5a und 5b und des Riemens 8 dieser maximale Abstand nahezu beliebig vergrößert werden. Ebenso könnte es sinnvoll sein, kurze Führungsstangen zu verwenden, z.B. dann, wenn die Handlichkeit des Positionierfahrzeugs im Vordergrund steht.

Des Weiteren enthält das Fahrzeugbasisteil eine Aufnahmevorrichtung 16. Die Aufnahmevorrichtung 16 hat den Zweck, Geräte, beispielsweise Geräte zum Betreiben einer Messsonde, aufzunehmen. In diesem Ausführungsbeispiel ist die Aufnahmevorrichtung 16 als Plexiglasplatte ausgebildet, die über der zweiten Achse 12 des Fahrzeugbasisteils 2 angeordnet ist.

Ein solches erfindungsgemäßes Positionierfahrzeug lässt sich nach folgendem Verfahren betreiben:
Das Positionierfahrzeug 1 wird entlang einer gewählten Verfahrlinie verfahren. Während des Verfahrens des Positionierfahrzeugs wird der Messsondenträger 4, durch den Riemen 8 aufgrund der Verbindung vom Messsondenträger 4 mit dem Riemen 8 über das erste Verbindungsmittel 10a in Verfahrrichtung, geführt durch die Führungsstangen 5a und 5b, zum ersten Umkehrpunkt geführt. Während dieser Phase ist die Absenkvorrichtung nicht aktiviert. Erreicht der Messsondenträger 4 den ersten Umkehrpunkt, so löst der Messsondenträger 4 den ersten Schalter 6 aus. Die Auslösung des Schalters 6 führt dazu, dass sich der Messsondenträger 4 mittels des Verbindungsmittels 10b mit dem Abschnitt des Riemens 8 verbindet, der sich entgegen der Verfahrrichtung des Positionierfahrzeugs bewegt. Das Verbindungsmittel 10a wird gleichzeitig deaktiviert. Des Weiteren wird durch die Auslösung des ersten Schalters 6 auch die Absenkvorrichtung aktiviert, die den Messsondenträger absenkt. Bei einem weiteren Verfahren des Positionierfahrzeugs wird der abgesenkte Messsondenträger 4 bis zum Umkehrpunkt vom Riemen 8 zurückgeführt. In dieser Phase des Rückführens befindet sich der Messsondenträger 4 während des Verfahrens des Positionierfahrzeugs genau über einem Punkt. Erreicht der Messsondenträger 4 schließlich den zweiten Umkehrpunkt, so wird der zweite Schalter 7 ausgelöst. Die Auslösung des zweiten Schalters 7 führt zur Deaktivierung des Verbindungsmittels 10b, zu einer Aktivierung des Verbindungsmittels 10a und zu einer Anhebung des Messsondenträgers 4. Bei einem weiteren Verfahren des Positionierfahrzeugs wiederholt sich dieser Vorgang.

Folgender konkreter Einsatz des erfindungsgemäßen Positionierfahrzeugs wäre denkbar:
Die Oberschale einer Brücke soll mittels Ultraschall überprüft werden. Vorgesehen ist eine Abrasterung in Abständen von 15 cm entlang verschiedener Linien.
Das erfindungsgemäße Positionierfahrzeug wird dementsprechend mit einer Ultraschallmesssonde ausgestattet. Der erste Schalter 6 und der zweite Schalter 7 werden auf der Führungsstange 5a so angeordnet, dass sie abzüglich der Breite des Messsondenträgers 4, einen Abstand von 7,5 cm haben. Das Positionierfahrzeug wird nun an den Anfang einer vorgesehenen Verfahrlinie positioniert. Der Schrittmotor wird aktiviert, wodurch das Positionierfahrzeug entlang der Verfahrlinie vorwärts bewegt wird. Während des Verfahrens des Positionierfahrzeugs 1 wird die Messsonde in Abständen von 15 cm vom Messsondenträger 4 auf die Oberschale der Brücke abgesenkt. In dieser Phase werden eine oder mehrere Ultraschallmessungen durchgeführt. Hat das Positionierfahrzeug 1 die Verfahrlinie abgefahren, so wird es an den Anfang einer weiteren Verfahrlinie positioniert. Auf diese Weise kann die Oberschale der Brücke vollständig abgerastert werden.

## Patentansprüche

1. Verfahren zum Betreiben eines Positionierfahrzeugs (1) zum Positionieren einer Messsonde in definierten Abständen entlang einer Verfahrlinie, wobei das Positionierfahrzeug (1) ein Fahrzeugbasisteil (2) mit einer Führungsvorrichtung (3) und einen von dieser Führungsvorrichtung (3) geführten Messsondenträger (4) enthält, enthaltend die Schritte, dass das Fahrzeugbasisteil (2) entlang einer Verfahrlinie verfahren wird, und während des Verfahrens des Fahrzeugbasisteils (2) in einem ersten Schritt der Messsondenträger (4) von der Führungsvorrichtung (3) in Verfahrrichtung bis zu einem ersten Umkehrpunkt (6) der Führungsvorrichtung (3) geführt wird, und dass in einem zweiten Schritt der Messsondenträger (4) von der Führungsvorrichtung (3) entgegen der Verfahrrichtung bis zu einem zweiten Umkehrpunkt (7) der Führungsvorrichtung (3) zurückgeführt wird, wobei die Geschwindigkeit des Messsondenträgers (4) relativ zum Fahrzeugbasisteil (2) die negative Geschwindigkeit des Fahrzeugbasisteils (2) ist, und beim Erreichen des zweiten Umkehrpunktes (7) das Verfahren mit dem ersten Schritt fortsetzt.

2. Verfahren nach Anspruch 1, **dadurch gekennzeichnet, dass** der Messsondenträger (4) während des zweiten Schritts zumindest zeitweise abgesenkt wird.

3. Positionierfahrzeug zum Positionieren einer Messsonde in definierten Abständen entlang einer Verfahrlinie zum Durchführen des Verfahrens nach Anspruch 1 oder 2, enthaltend ein verfahrbares Fahrzeugbasisteil (2) mit einer Führungsvorrichtung (3) und einen von dieser Führungsvorrichtung (3) in einer Führung (5) geführten Messsondenträger (4), wobei die Führung (5) den Messsondenträger (4) parallel zur Verfahrrichtung des Fahrzeugbasisteils (2) führt, und die Führung (5) einen ersten Umkehrpunkt (6) und einen zweiten Umkehrpunkt (7) aufweist, und die Führungsvorrichtung (3) Führungsmittel (8) aufweist, um bei einem Verfahren des Fahrzeugbasisteils (2) den Messsondenträger (4) nach seinem Erreichen des zweiten Umkehrpunktes (7) in Verfahrrichtung bis zu dem ersten Umkehrpunkt (6) zu führen, und um den Messsondenträger (4) nach seinem Erreichen des ersten Umkehrpunkts (6) entgegen der Verfahrrichtung bis zum zweiten Umkehrpunkt (7) zurückzuführen, wobei in der Phase der Rückführung der Messsondenträger (4) relativ zum Fahrzeugbasisteil (2) die negative Geschwindigkeit des Fahrzeugbasisteils (2) besitzt.

4. Vorrichtung nach Anspruch 3, **dadurch gekennzeichnet, dass** die Führungsvorrichtung (3) einen ersten Schalter (6) und einen zweiten Schalter (7) aufweist, und der Messsondenträger (4) am Ort des ersten Umkehrpunkts (6) den ersten Schalter (6) auslöst und der Messsondenträger (4) am Ort des zweiten Umkehrpunkts (7) den zweiten Schalter (7) auslöst, und die Auslösung des ersten Schalters (6) die Führungsmittel (8) zum Führen des Messsondenträgers entgegen der Verfahrrichtung des Fahrzeugbasisteils (2) aktiviert, und die Auslösung des zweiten Schalters (7) die Führungsmittel (8) zum Führen des Messsondenträgers (4) in Verfahrrichtung des Fahrzeugbasisteils (2) aktiviert.

5. Vorrichtung nach einem der Ansprüche 3 und 4, **dadurch gekennzeichnet, dass** die Führungsmittel (8) einen umlaufenden Riemen (8) enthalten, der parallel zu der Führung (5) des Messsondenträgers (4) angeordnet ist, und der bei einem Verfahren des Fahrzeugbasisteils (2) durch im Fahrzeugbasisteil (2) enthaltene mechanische Übertragungsmittel (9), die eine Bewegung des Fahrzeugsbasisteils (2) übertragen, in Bewegung gesetzt wird, und der Messsondenträger (4) sich am Ort des ersten Umkehrpunkts (6) mit dem Teil des Riemens (8) mittels Verbindungsmittel (10b) verbindet, der sich entgegen der Verfahrrichtung des Fahrzeugbasisteils (2) bewegt, und der Messsondenträger (4) sich am Ort des zweiten Umkehrpunkts (7) mittels Verbindungsmittel (10a) mit dem Teil des Riemens (8) verbindet, der sich mit der Verfahrrichtung des Fahrzeugbasisteils (2) bewegt.

6. Vorrichtung nach einem der Ansprüche 3 bis 5, **dadurch gekennzeichnet, dass** die Führung (5) des Messsondenträgers eine erste Führungsstange (5a) und eine zweite Führungsstange (5b) aufweist, die den Messsondenträger (4) führen.

7. Vorrichtung nach Anspruch 6, **dadurch gekennzeichnet, dass** der Messsondenträger (4) lineare Kugellager aufweist, mittels derer er auf den Führungsstangen (5a, 5b) gelagert ist.

8. Vorrichtung nach einem der Ansprüche 3 bis 7, **dadurch gekennzeichnet, dass** der Messsondenträger (4) eine Absenkvorrichtung aufweist, welche sich absenkt, wenn sich der Messsondenträger (4) am Ort des ersten Umkehrpunktes (6) befindet, und welche sich anhebt, wenn sich der Messsondenträger am Ort des zweiten Umkehrpunkt (7) befindet.

9. Vorrichtung nach Anspruch 8, **dadurch gekennzeichnet, dass** die Absenkvorrichtung einen Luftzylinder zwecks Erzeugung eines gleichmäßigen Anpressdrucks aufweist.

## Claims

1. A method of operating a positioning vehicle (1) for positioning a measuring probe at defined distances along a line of travel, wherein the positioning vehicle (1) contains a vehicle base part (2) with a guiding apparatus (3) and a measuring-probe carrier (4) guided by the said guiding apparatus (3), comprising the steps that the vehicle base part (2) is moved along a line of travel, and during the travel of the vehicle base part (2) the measuring-probe carrier (4) is guided in a first step by the guiding apparatus (3) in the direction of travel as far as a first reversal point (6) of the guiding apparatus (3), and that in a second step the measuring-probe carrier (4) is moved back by the guiding apparatus (3) in a direction opposed to the direction of travel as far as a second reversal point (7) of the guiding apparatus (3), wherein the speed of the measuring-probe carrier (4) relative to the vehicle base part (2) is the negative speed of the vehicle base part (2), and when the second reversal point (7) is reached the method is continued with the first step.

2. A method according to Claim 1, **characterized in that** the measuring-probe carrier (4) is lowered at least intermittently during the second step.

3. A positioning vehicle for positioning a measuring probe at defined distances along a line of ing probe at defined distances along a line of travel in order to perform the method according to Claim 1 or 2, containing a movable vehicle base part (2) with a guiding apparatus (3) and a measuring-probe carrier (4) guided in a guide (5) by the said guiding apparatus (3), wherein the guide (5) guides the measuring-probe carrier (4) parallel to the direction of travel of the vehicle base part (2), and the guide (5) has a first reversal point (6) and a second reversal point (7), and the guiding apparatus (3) has guiding means (8) in order to guide - during the travel of the vehicle base part (2) - the measuring-probe carrier (4) in the direction of travel as far as the first reversal point (6) after it has reached the second reversal point (7), and in order to move the measuring-probe carrier (4) back in a direction opposed to the direction of travel as far as the second reversal point (7) after it has reached the first reversal point (6), wherein in the phase of the return the measuring-probe carrier (4) relative to the vehicle base part (2) is at the negative speed of the vehicle base part (2).

4. An apparatus according to Claim 3, **characterized in that** the guiding apparatus (3) has a first switch (6) and a second switch (7), and at the location of the first reversal point (6) the measuring-probe carrier (4) triggers the first switch (6) and at the location of the second reversal point (7) the measuring-probe carrier (4) triggers the second switch (7), and the triggering of the first switch (6) activates the guiding means (8) in order to guide the measuring-probe carrier in a direction opposed to the direction of travel of the vehicle base part (2), and the triggering of the second switch (7) activates the guiding means (8) in order to guide the measuring-probe carrier (4) in the direction of travel of the vehicle base part (2).

5. An apparatus according to one of Claims 3 and 4, **characterized in that** the guiding means (8) contain a circulating belt (8) which is arranged parallel to the guide (5) of the measuring-probe carrier (4) and which is set in motion during the travel of the vehicle base part (2) by mechanical transmission means (9) which are contained in the vehicle base part (2) and which transmit a movement of the vehicle base part (2), and the measuring-probe carrier (4) is connected at the location of the first reversal point (6) by means of connecting means (10b) to that part of the belt (8) which moves in a direction opposed to the direction of travel of the vehicle base part (2), and the measuring-probe carrier (4) is connected at the location of the second reversal point (7) by means of connecting means (10a) to that part of the belt (8) which moves in the direction of travel of the vehicle base part (2).

6. An apparatus according to any one of Claims 3 to 5, **characterized in that** the guide (5) of the measuring-probe carrier has a first guide rod (5a) and a second guide rod (5b) which guide the measuring-probe carrier (4).

7. An apparatus according to Claim 6, **characterized in that** the measuring-probe carrier (4) has linear ball bearings by means of which it is mounted on the guide rods (5a, 5b).

8. An apparatus according to any one of Claims 3 to 7, **characterized in that** the measuring-probe carrier (4) has a lowering apparatus which moves downwards when the measuring-probe carrier (4) is situated at the location of the first reversal point (6) and which moves upwards when the measuring-probe carrier is situated at the location of the second reversal point (7).

9. An apparatus according to Claim 8, **characterized in that** the lowering apparatus has an air cylinder in order to generate a uniform contact pressure.

## Revendications

1. Procédé d'utilisation d'un véhicule de positionnement (1) destiné au positionnement d'une sonde de mesure à intervalles définis le long d'une ligne de déplacement, le véhicule de positionnement (1) comportant une partie de base de véhicule (2) avec un dispositif de guidage (3) et un support de sonde de mesure (4) guidé par ce dispositif de guidage (3), comportant les étapes consistant à déplacer la partie de base de véhicule (2) le long d'une ligne de déplacement et, pendant le déplacement de la partie de base de véhicule (2), dans une première étape, à guider le support de sonde de mesure (4) du dispositif de guidage (3) dans le sens de déplacement jusqu'à un premier point d'inversion (6) du dispositif de guidage (3) et, dans une seconde étape, à renvoyer le support de sonde de mesure (4) du dispositif de guidage (3) dans le sens inverse du sens de déplacement jusqu'à un second point d'inversion (7) du dispositif de guidage (3), la vitesse du support de sonde de mesure (4) par rapport à la partie de base de véhicule (2) étant la vitesse négative de la partie de base de véhicule (2), et le procédé se poursuivant avec la première étape une fois que le second point d'inversion (7) est atteint.

2. Procédé selon la revendication 1, **caractérisé en ce que** le support de sonde de mesure (4) est abaissé au moins temporairement pendant la seconde étape.

3. Véhicule de positionnement destiné au positionnement d'une sonde de mesure à intervalles définis le long d'une ligne de déplacement, permettant la réalisation du procédé selon la revendication 1 ou 2, comportant une partie de base de véhicule déplaçable (2) avec un dispositif de guidage (3) et un support de sonde de mesure (4) guidé par ce dispositif de guidage (3) dans un guide (5), le guide (5) guidant le support de sonde de mesure (4) parallèlement au sens de déplacement de la partie de base de véhicule (2) et le guide (5) comportant un premier point d'inversion (6) et un second point d'inversion (7), et le dispositif de guidage (3) comportant des moyens de guidage (8) pour, en cas d'un déplacement de la partie de base de véhicule (2), guider le support de sonde de mesure (4), après qu'il a atteint le second point d'inversion (7), dans le sens de déplacement jusqu'au premier point d'inversion (6) et pour renvoyer le support de sonde de mesure (4), après qu'il a atteint le premier point d'inversion (6), dans le sens inverse du sens de déplacement jusqu'au second point d'inversion (7), le support de sonde de mesure (4) possédant, dans la phase de renvoi du support de sonde de mesure (4) par rapport à la partie de base de véhicule (2), la vitesse négative de la partie de base de véhicule (2).

4. Dispositif selon la revendication 3, **caractérisé en ce que** le dispositif de guidage (3) comporte un premier interrupteur (6) et un second interrupteur (7), et le support de sonde de mesure (4) déclenche le premier interrupteur (6) à l'emplacement du premier point d'inversion (6), et le support de sonde de mesure (4) déclenche le second interrupteur (7) à l'emplacement du second point d'inversion (7), et le déclenchement du premier interrupteur (6) active les moyens de guidage (8) destinés à guider le support de sonde de mesure (4) dans le sens inverse du sens de déplacement de la partie de base de véhicule (2), et le déclenchement du second interrupteur (7), active les moyens de guidage (8) destinés à guider le support de sonde de mesure (4) dans le sens de déplacement de la partie de base de véhicule (2).

5. Dispositif selon l'une quelconque des revendications 3 et 4, **caractérisé en ce que** les moyens de guidage (8) comprennent une courroie sans fin (8) qui est disposée parallèlement au guide (5) du support de sonde de mesure (4) et qui, en cas d'un déplacement de la partie de base de véhicule (2) par des moyens de transmission mécaniques (9) compris dans la partie de base de véhicule (2), lesquels transmettent un mouvement de la partie de base de véhicule (2), est mise en mouvement, et le support de sonde de mesure (4) se raccorde, à l'emplacement du premier point d'inversion (6), au moyen de moyens de raccordement (10b), à la partie de la courroie (8) qui se déplace dans le sens inverse du sens de déplacement de la partie de base de véhicule (2), et le support de sonde de mesure (4) se raccorde, à l'emplacement du second point d'inversion (7), à l'aide de moyens de raccordement (10a), à la partie de courroie (8) qui se déplace dans le sens de déplacement de la partie de base de véhicule (2).

6. Dispositif selon l'une quelconque des revendications 3 à 5, **caractérisé en ce que** le guide (5) du support de sonde de mesure (4) comporte une première tige de guidage (5a) et une seconde tige de guidage (5b) qui guident le support de sonde de mesure (4).

7. Dispositif selon la revendication 6, **caractérisé en ce que** le support de sonde de mesure (4) comporte des roulements à billes linéaires au moyen desquels il est mont6 sur les tiges de guidage (5a, 5b).

8. Dispositif selon l'une quelconque des revendications 3 à 7, **caractérisé en ce que** le support de sonde de mesure (4) comporte un dispositif d'abaissement qui s'abaisse lorsque le support de sonde de mesure (4) se trouve à l'emplacement du premier point d'inversion (6) et qui se relève lorsque le support de sonde de mesure se trouve à l'emplacement du second point d'inversion (7).

9. Dispositif selon la revendication 8, **caractérisé en ce que** le dispositif d'abaissement comporte un vérin pneumatique en vue de générer une force de compression régulière.
